# EUROPEAN PATENT APPLICATION

(11) **EP 4 678 565 A1**
(43) Date of publication of application: **14.01.2026**
(21) Application number: 24770206.1
(22) Date of filing: 22.01.2024
(51) Int. Cl.: B65G 1/04

(54) **AUTOMATED WAREHOUSE**

(30) Priority: 10.03.2023 JP 2023037784
(71) Applicant: Murata Machinery, Ltd., Kyoto-shi, Kyoto 601-8326 (JP)
(72) Inventor: YAMADA Fumie, Kyoto-shi, Kyoto 612-8686 (JP)
(74) Representative: Weickmann & Weickmann PartmbB
(86) International application number: PCT/JP2024/001699
(87) International publication number: WO 2024/190084

(57) **Abstract**

There is provided a shuttle-type automated warehouse that can efficiently store a plurality of types of packages having different depth widths in a depth direction of a rack. A shuttle type automated warehouse 1 of the present invention includes a loading/unloading vehicle 4 including a transfer device 12, and racks 2 on both sides of a traveling path 10 for the vehicle, the transfer device 12 includes a base arm 34, middle arms 36 and 38, a top arm 40, end hooks 46a and 46b, and intermediate hooks 48a and 48b, the end hooks 46a and 46b are formed in positions and a width that allow two large packages A to be transferred from front to back of each of the racks 2 by only the end hooks 46a and 46b, with respect to the racks 2 on both the sides of the traveling path 10, and the intermediate hooks 48a and 48b are formed in positions and a width that allow three small packages B to be transferred from the front to the back of each of the racks 2 by only the intermediate hooks 48a and 48b, with respect to the racks 2 on both the sides of the traveling path 10.

## Description

### Technical Field

The present invention relates to an automated warehouse, and particularly relates to a shuttle-type automated warehouse including a loading/unloading vehicle including a transfer device that transfers a package, and racks disposed on both sides of a traveling path for the loading/unloading vehicle.

### Background Art

Conventionally, there has been known a rear hook type transfer device including side arms and hooks for transferring packages. For example, Patent Literature 1 discloses a transfer device that is provided with openable and closable hooks at both front and rear ends of a pair of left and right side arms that are extendable and contractible, and discharges a package onto a rack by bringing the hooks on the tip side into a retracted state and retracting the arms.

### Citation List

### Patent Literature

Patent Literature 1: Prepublished Patent Publication WO2012/029339

### Summary of Invention

### Technical Problem

Here, in the shuttle-type automated warehouse, a plurality of types of packages having different depth widths may be stored (discharged) in the depth direction of the rack from the shuttle. In such a case, in particular, at the time of storing the package into the placement position on the back side of the rack, there is a demand to reduce the stroke amount of the side arms as much as possible, and shorten the time required for discharging the packages.

Thus, the present invention has been made to solve the aforementioned problem and has an object to provide a shuttle-type automated warehouse that can efficiently store a plurality of types of packages having different depth widths in a depth direction of a rack.

### Solution to Problem

In order to achieve the above-described object, the present invention is a shuttle type automated warehouse including a loading/unloading vehicle including a transfer device that transfers a package, and racks disposed at both sides of a traveling path for the loading/unloading vehicle, wherein the racks are each capable of storing two large packages having a predetermined depth width, in a depth direction, or three small packages having a predetermined depth width, in the depth direction, the transfer device includes a side arm that is a side arm having at least a base arm, a middle arm, and a top arm, and capable of advancing to the racks on both the sides, in which a tip of the top arm advances to a rear end position of a package that is transferred to a backmost side in the depth direction of each of the racks, end hooks respectively disposed at front and rear ends of the top arm, and two intermediate hooks disposed between the respective end hooks in the top arm, the end hooks are formed in positions and a width that allow the two large packages to be transferred from front to back of each of the racks by only the end hooks, with respect to the racks on both the sides of the traveling path, and the intermediate hooks are formed in positions and a width that allow the three small packages to be transferred from the front to the back of each of the racks by only the intermediate hooks, with respect to the racks on both the sides of the traveling path.

According to the present invention configured as above, since the side arm in which the tip of the top arm advances to the rear end position of the package that is transferred to the backmost side in the depth direction of the rack, the end hooks respectively disposed at the front and rear ends of the top arm, and the two intermediate hooks that are disposed between the respective end hooks in the top arm are included, the end hooks are formed in the position and width that allows the two large packages to be transferred from the front to the back of each of the racks by only the end hooks, and the intermediate hooks are formed in the position and width that allows the three small packages to be transferred from the front to the back of each of the racks by only the intermediate hooks, it is possible to transfer the large packages and the small packages to the placement positions on the backmost side of the racks without change of the hook, and thereby it is possible to transfer the packages to the placement positions on the backmost side of the racks with a minimum stroke amount of the side arm. Accordingly, it is possible to efficiently store a plurality of types of packages having different depth widths in the depth direction of the racks.

Further, in order to achieve the above-described object, the present invention is a shuttle type automated warehouse including a loading/unloading vehicle including a transfer device that transfers a package, and racks disposed on both sides of a traveling path for the loading/unloading vehicle, wherein the racks are each capable of storing two large packages having a predetermined depth width, in a depth direction, or three small packages having a predetermined depth width, in the depth direction, the transfer device includes a side arm that is a side arm having at least a base arm, a middle arm, and a top arm, and is capable of advancing to the racks on both the sides, in which a tip of the top arm advances to a rear end position of a package that is transferred to a backmost side in the depth direction of each of the racks, end hooks respectively disposed at front and rear ends of the top arm, and two intermediate hooks disposed between the respective end hooks in the top arm, the end hooks are hooks that are formed to have a space corresponding to at least a maximum depth width of each of the large packages between the respective end hooks, and the intermediate hooks are hooks that are formed to have a space corresponding to at least a maximum depth width of each of the small packages from the end hooks on a far side of the respective end hooks.

According to the present invention configured as above, since the side arm in which the tip of the top arm advances to the rear end position of the package that is transferred to the backmost side in the depth direction of the rack, the end hooks respectively disposed at the front and rear ends of the top arm, and the two intermediate hooks that are disposed between the respective end hooks of the top arm are included, the end hooks are the hooks that are formed to have the space corresponding to at least the maximum depth width of the large package between the respective end hooks, and the intermediate hooks are the hooks that are formed to have the space corresponding to at least the maximum depth width of the small package from the end hooks on a far side of the respective end hooks, it is possible to transfer the large packages and the small packages to the placement positions on the backmost side of the racks without change of the hook, and thereby it is possible to transfer the packages to the placement positions on the backmost side of the racks with a minimum stroke amount of the side arm. Accordingly, it is possible to efficiently store a plurality of types of packages having different depth widths in the depth direction of the racks.

Further, in the present invention, it is preferable that a controller that controls a predetermined conveyor on a loading side which is provided on one side of the traveling path for the loading/unloading vehicle and on which a package to be loaded onto the vehicle is placed, and a storage position of a package to each of the racks and the side arm of the transfer device is further included, wherein the controller is configured to determine a stroke of the side arm at a time of loading in the predetermined conveyor based on whether the storage position of each of the racks is on a same side as or an opposite side to the predetermined conveyor, when storing the three small packages in the depth direction of each of the racks.

According to the present invention configured as above, since the stroke of the side arm is changed according to whether the storage position of the rack is on the same side as or opposite side to the predetermined conveyor for loading on a loading side, change of the hook is unnecessary.

Further, in the present invention, it is preferable that a controller that controls a storage position of a package to each of the racks, and the side arm of the transfer device is further included, wherein the controller is configured to determine a shelf of a switching destination from shelves of a rack on a same side when switching a package to the shelf from a shelf of the racks.

According to the present invention configured as above, transfer of the package between shelves is performed in the rack on the same side, and thereby change of the hook is unnecessary.

### Advantageous Effect of Invention

According to the present invention, it is possible to efficiently store a plurality of types of packages having different depth widths in the depth direction of the rack.

### Brief Description of Drawings

Figure 1 is a front view showing a schematic configuration of a shuttle-type automated warehouse according to an embodiment of the present invention.
Figure 2 is a plan view showing a schematic configuration of the shuttle-type automated warehouse according to the embodiment of the present invention.
Figure 3 is a perspective view showing schematic configurations of a loading/unloading vehicle and a transfer device thereof of the shuttle-type automated warehouse according to the present embodiment.
Figure 4 is a block diagram showing a schematic configuration of a control system of the transfer device included by the loading/unloading vehicle of the present embodiment.
Figure 5 is a schematic view of a top arm and respective hooks for explaining spaces between the respective hooks provided at the top arm of the transfer device according to the present embodiment.
Figure 6 is a schematic view showing a transfer pattern according to the transfer device of the present embodiment, which is a view showing a rack in which placement positions for two large packages are defined in a depth direction, and a shuttle passage.
Figure 7 is a schematic view showing a transfer pattern according to the transfer device of the present embodiment, which is a view showing a rack in which placement positions for three small packages are defined in the depth direction, and the shuttle passage.
Figure 8 is a schematic view showing an operation pattern of a transfer device according to a reference example.
Figure 9 is a schematic view showing a configuration of side arms of a transfer device according to the reference example and an operation pattern thereof.

### Description of Embodiment

Next, with reference to the accompanying drawings, a shuttle-type automated warehouse according to an embodiment of the present invention will be described.

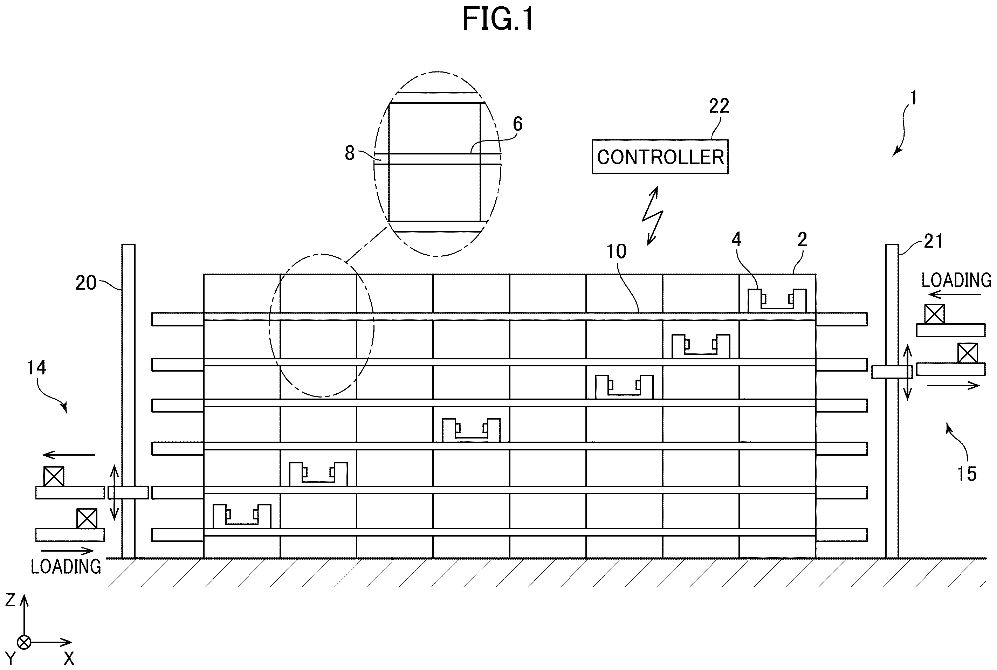

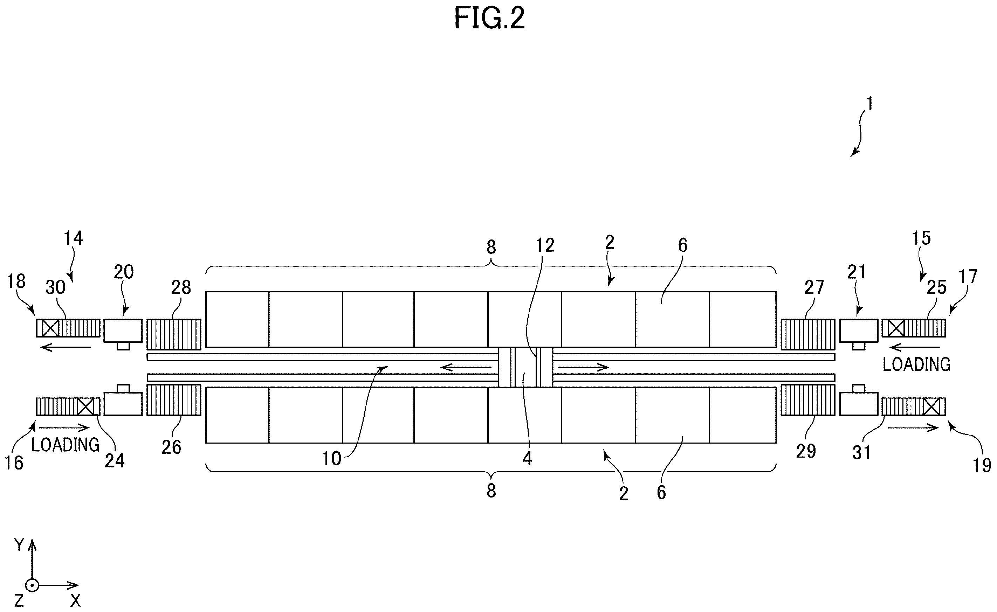

First, based on Figure 1 and Figure 2, a schematic configuration of the shuttle-type automated warehouse according to the embodiment of the present invention will be described. Figure 1 is a front view showing a schematic configuration of the shuttle-type automated warehouse according to the embodiment of the present invention, and Figure 2 is a plan view showing the schematic configuration of the shuttle-type automated warehouse according to the embodiment of the present invention.

As shown in Figure 1 and Figure 2, reference sign 1 denotes the shuttle-type automated warehouse of the present embodiment (hereinafter, referred to as "automated warehouse"). This automated warehouse 1 includes a rack 2, and a plurality of loading/unloading vehicles (hereinafter, referred to as "vehicles") 4.

The rack 2 includes a plurality of shelf stages 8 having a series of shelves 6 aligned in a left-right direction (X-direction shown in the drawing) in an up-down direction (Z-direction shown in the drawing). Note that the plurality of shelves 6 may be respectively separate bodies or may be integrally formed.

Next, as shown in Figure 2, the plurality of vehicles 4 respectively move in the left-right direction along a traveling path 10 having a pair of rails independently from one another, and perform delivery of packages with respect to the rack 2, that is, package discharge onto the rack 2 and package loading onto the vehicles 4 from the rack 2 by a transfer device 12 described later. The plurality of vehicles 4 are arranged on the plurality of shelf stages 8, one for each shelf. As shown in Figure 2, the rack 2 has a pair of racks 2 that face each other with the traveling path 10 for the vehicle 4 therebetween.

Note that a modification example of the automated warehouse 1 of the present embodiment may be, for example, an automated warehouse 1 in which one loading/unloading vehicle with a lifter is arranged for every three shelf stages 8, and the one vehicle can store packages on the three shelf stages 8 respectively.

Next, as shown in Figure 1 and Figure 2, the automated warehouse 1 includes, on both sides thereof, first and second stations 14 and 15 for receiving packages to be stored in the rack 2 and receiving packages that are taken out of the rack 2. The respective stations 14 and 15 respectively have loading stations 16 and 17 and unloading stations 18 and 19. In the present embodiment, the first station 14 is disposed at a position in the up-down direction corresponding to the shelf stage 8 on a lowermost stage, and the second station 15 is disposed at a position in the up-down direction corresponding to the shelf stage 8 on an uppermost stage.

Furthermore, the automated warehouse 1 includes first and second raising/lowering devices (vertical conveyors) 20 and 21 that raise and lower packages. The first and second raising/lowering devices 20 and 21 mediate delivery of packages between the first and second stations 14 and 15 and the vehicle 4, respectively.

The automated warehouse 1 includes a controller 22 that controls operations of these vehicles 4 and the like. The vehicles 4 and the like operate according to control signals transmitted from the controller 22 by wireless communication or wired communication.

Here, a basic loading/unloading operation of packages of the automated warehouse 1 by the controller 22 will be described.

First, as shown in Figure 2, in the first station 14, the loading station 16 includes a loading conveyor 24, and a buffer conveyor 26 included in each of the stages 8, and the unloading station 18 includes an unloading conveyor 30, and a buffer conveyor 28 included in each of the stages 8.

As loading work of a package, a package that is transferred by the loading conveyor 24 is placed on the buffer conveyor 26 at a height position corresponding to the shelf stage 8 to be loaded by the first raising/lowering device 20. The package placed on the buffer conveyor 26 is received by the vehicle 4 of the corresponding shelf stage 8 and is transferred (discharged) to any of the shelves 6 on the shelf stage 8.

As unloading work of a package, the package that is placed on any of the shelves 6 of the shelf stage 8 that is loaded is loaded on the vehicle 4 of the corresponding shelf stage 8 and is conveyed to the buffer conveyor 28 at a height position corresponding to this shelf stage 8. The package that is conveyed to the buffer conveyor 28 is moved to the unloading conveyor 30 via the first raising/lowering device 20 and is further conveyed to a conveyance destination connected to the unloading conveyor 30.

The second station 15 is similar to the first station 14, the loading station 17 includes a loading conveyor 25, and a buffer conveyor 27 included by each of the stages 8, the unloading station 19 includes an unloading conveyor 31, and a buffer conveyor 29 included by each of the stages 8, and the aforementioned loading/unloading operation is performed. Furthermore, the loading work and the unloading work via one of the first station 14 and the second station 15 can be executed independently from the loading work and the unloading work via the other one.

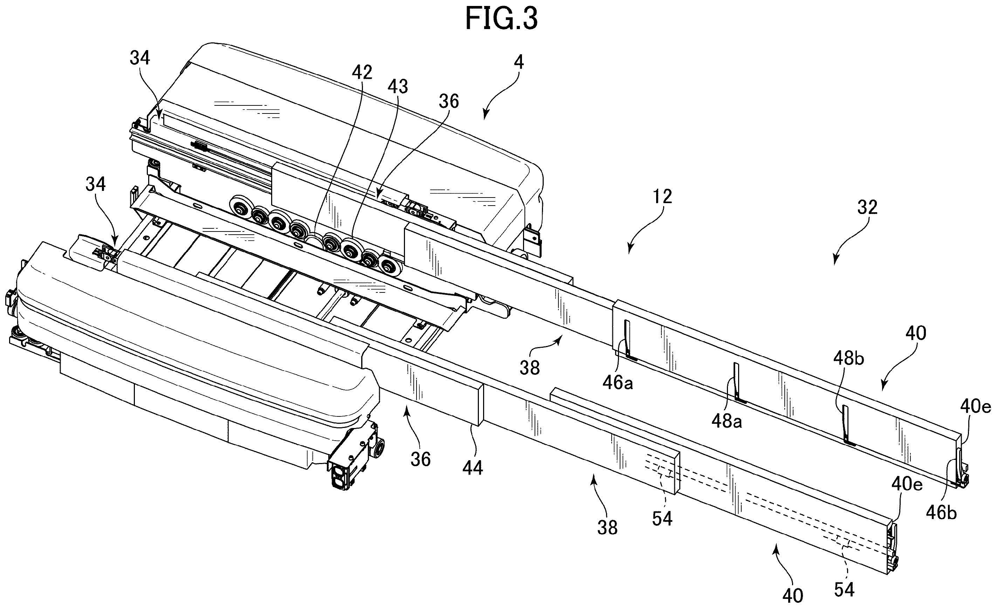

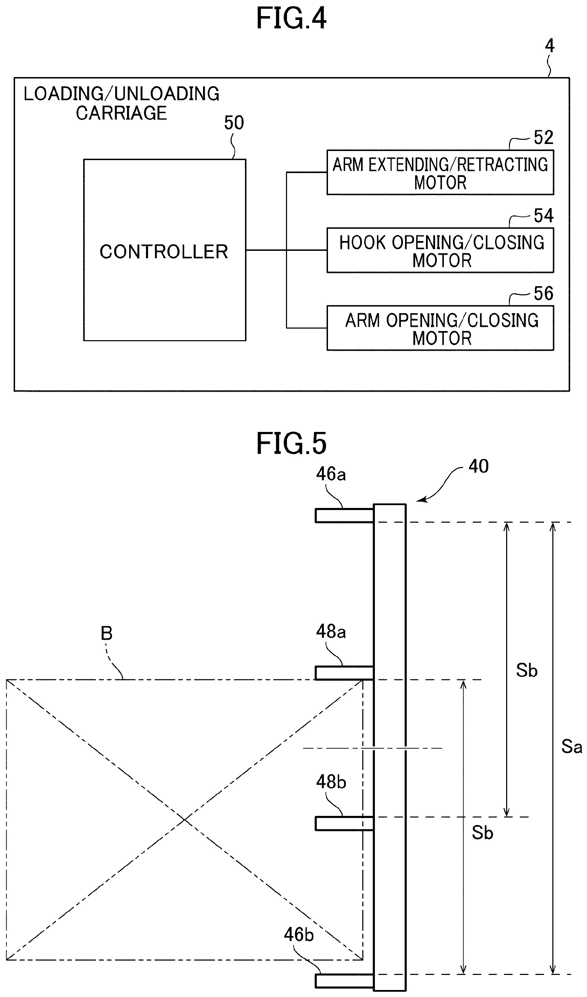

Next, based on Figure 3 and Figure 4, schematic configurations of the loading/unloading vehicle and the transfer device thereof of the shuttle-type automated warehouse of the present embodiment will be described. Figure 3 is a perspective view showing the schematic configurations of the loading/unloading vehicle and the transfer device thereof of the shuttle type automated warehouse according to the present embodiment, and Figure 4 is a block diagram showing a schematic configuration of a control system of the transfer device included by the loading/unloading vehicle of the present embodiment.

First, as shown in Figure 3, the vehicle 4 includes the transfer device 12. The transfer device 12 includes a pair of side arms 32, and takes in (loads) and sends out (discharges) a package by these side arms 32 extending and contracting in a front-rear direction (Y-direction shown in Figure 1, and Figure 2).

The pair of side arms 32 each has a base arm 34, first and second middle arms 36 and 38 coupled to the base arm 34, and a top arm 40 coupled to these middle arms 36 and 38. Since configurations of the respective arms 34, 36, 38, and 40 of the pair of side arms 32 are the same as each other on the left and right, the arms on one side will be described below.

The base arm 34 is fixed to the vehicle 4. A spline shaft 42 extends through a central portion of the base arm 34 in the left-right direction (X-direction shown in Figures 1 and 2), and this spline shaft 42 is rotationally driven by a motor (arm extending/retracting motor 52 shown in Figure 4) built in the vehicle 4.

In each of front and rear of the spline shaft 42, a plurality of pinion gears 43 arranged side by side are disposed so as to mesh with each other, and a rack gear 44 of the first middle arm 36 is disposed so as to mesh with these pinion gears 43. Furthermore, a first cross belt not illustrated is passed across the first middle arm 36 and the second middle arm 38, and a second cross belt not illustrated is passed across the second middle arm 38 and the top arm 40.

In the present embodiment, when the spline shaft 42 is rotated in a predetermined direction, the respective pinion gears 43 that are driven rotate, and the rack gear 44 receiving the rotation moves in either one of the front and rear directions, and the first middle arm 36 also moves in the same direction, mainly by these configurations. Subsequently, due to an action of the first cross belt described above, the second middle arm 38 moves in association with the movement of the first middle arm 36, and furthermore, due to an action of the second cross belt, the top arm 40 moves in association with the movement of the second middle arm 38.

Note that in the present embodiment, the side arm 32 is formed of double reach arms 34, 36, 38 and 40 of four places, but a side arm 32 may be formed of another number of arms, for example, arms of five plates.

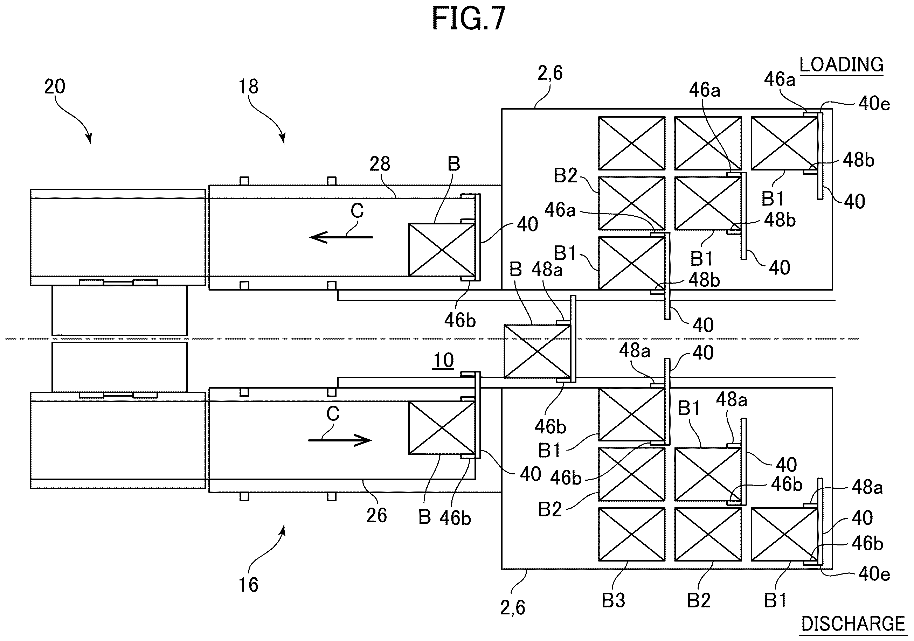

The side arm 32 having the base arm 34, the two middle arms 36 and 38, and the top arm 40 as above can advance to the racks 2 (shelves 6) disposed on both sides of the traveling path 10 for the vehicle 4 by the aforementioned drive mechanism (42, 43, 44 and the like), and a tip portion 40e thereof advances to a rear end position of a package that is transferred to a backmost side in a depth direction of the rack 2. For example, in Figure 7 described later, in the rack 2 shown as a loading side, the tip portion 40e of the top arm 40 advances to a rear end position of a package B1 that is transferred on the backmost side of the rack 2. In the top arm 40 located at the position in Figure 7, an end hook 46a at the tip in a protrusion position engages with a rear end portion of the package B1, and takes (loades) the package B1 onto the vehicle 4.

Here, a motor (not illustrated) that moves the base arms 34 in the left-right direction so as to narrow or expand a space between the entire pair of side arms 32 is incorporated into the vehicle 4. That is to say, when a package with a predetermined package width is transferred, the space between the respective top arms 40 is firstly narrowed to a distance that allows either one of the hooks 46 and 48 described later to engage with a front/rear end of the package by this motor. In this case, the top arm 40 is either moved close to a position that maintains a predetermined small clearance between it and the package, or clamps a package to a degree that does not apply excessive pressure on the package.

Next, the top arm 40 includes end hooks 46a and 46b respectively at front and rear end portions thereof. These end hooks 46a and 46b are configured to be rotatable between retraction positions (positions shown in Figure 3) where they are accommodated in the top arm 40, and protrusion positions where they are rotated approximately 90° from the retraction positions and protrude between the pair of top arms 40. In the protrusion positions, these end hooks 46a and 46b engage with a front end or a rear end of a package and take in or send out the package.

Furthermore, the top arm 40 includes two intermediate hooks 48a and 48b that are disposed at a predetermined space, between the respective end hooks 46a and 46b. These intermediate hooks 48a and 48b are also configured to be rotatable between retraction positions (positions shown in Figure 3) where they are accommodated in the top arm 40, and protrusion positions where they protrude between the pair of top arms 40 similarly to the aforementioned end hooks 46a and 46b, and engage with a front end or a rear end of a package and take in or send out the package, in the protrusion positions.

Furthermore, as shown in Figure 3, these hooks are provided to be arranged in the order of the end hook 46a, the intermediate hook 48a, the intermediate hook 48b, and the end hook 46b along a longitudinal direction of the top arm 40.

The top arm 40 includes a hook opening/closing motor 54 (see Figure 3) that rotates the end hook 46a, 46b and the intermediate hook 48a, 48b.

The end hooks 46a and 46b, and the intermediate hooks 48a and 48b are all formed of rod-shaped members of similar shapes (for example, members having a rectangular shape in section), and in the present embodiment, thicknesses in the front-rear direction of the intermediate hooks 48a and 48b (widths in the depth direction of the rack 2), and a thickness in the front-rear direction of the end hook 46a, 46b (width in the depth direction of the rack 2) are the same.

The "width" of these hooks 46 and 48 with respect to the depth direction of the rack 2 is appropriately set so as to be able to ensure predetermined spaces Sa and Sb (see Figure 5) of the respective hooks 46a, 46b, 48a, and 48b as described later.

Next, as shown in Figure 4, the loading/unloading vehicle 4 has a controller 50 for controlling the operations of the arms 36, 38 and 40, and the hooks 46a, 46b and 48a, 48b of the transfer device 12 described above. The controller 50 controls the arm extending/retracting motor 52 that rotates the above-described spline shaft 42 to extend and contract the side arm 32. Furthermore, the controller 50 controls the hook opening/closing motor 54 that causes the respective end hooks 46a and 46b to open and close and causes the intermediate hooks 48a and 48b to open and close. Furthermore, the controller 50 controls an arm opening/closing motor 56 for adjusting the space between the side arms 32.

Next, based on Figure 5, disposition and a positional relationship of the respective hooks will be described. Figure 5 is a schematic view showing a top arm and the respective hooks for explaining the spaces of the respective hooks provided at the top arm of the transfer device according to the preset embodiment.

First, as shown in Figure 5, the respective end hooks 46a and 46b are disposed at positions with a predetermined space Sa from each other. The predetermined space Sa is set to a space (distance) having at least a space corresponding to a maximum depth width of a "large package" described later.

In the present embodiment, the predetermined space Sa like this is set to a space equal to the depth width of one large package described later, and thereby, the large package fits between the end hook 46a in the protrusion position and the end hook 46b in the protrusion position.

Furthermore, as shown in Figure 5, the respective intermediate hooks 48a and 48b are disposed at positions with predetermined spaces Sb with respect to the respective end hooks 46a and 46b. The predetermined spaces Sb are a space Sb between the first intermediate hook 48a, and the second end hook 46b that is on a far side (of the respective end hooks 46a and 46b) with respect to the first intermediate hook 48a, and a space Sb between the second intermediate hook 48b, and the first end hook 46a on a far side with respect to the second intermediate hook 48b. These spaces Sb are both set to a space (distance) having at least a space corresponding to a maximum depth width of a "small package" described later.

In the present embodiment, the predetermined space Sb like this is set to a space equal to the depth width of one small package described later, and thereby, the small package fits between the end hook 46a in the protrusion position and the intermediate hook 48b in the protrusion position, or between the end hook 46b in the protrusion position and the intermediate hook 48a in the protrusion position.

Note that in the present embodiment, the "space" can be also said to be an inward distance from an end surface of one hook to an end surface of another hook, and the inward distance is set according to a width in the depth direction of the "large package" or the "small package" described later.

Next, preconditions of the automated warehouse 1 of the present embodiment will be described.

First, in the present specification, a "package width" of a package is a width of the package in the left-right direction (X-direction) and means the width of the package in the traveling direction of the vehicle 4.

On the other hand, a "width in the depth direction" of a package is a width of the package in the front-rear direction (Y-direction), and means the width of the package in the depth direction of the rack 2.

In the automated warehouse 1 of the present embodiment, a ratio of the width in the front-rear direction (Y-direction) of the vehicle 4, that is, the width in the front-rear direction of the region where the package can be placed between the pair of side arms 32, and the width in the front-rear direction (depth direction) of the rack 2 (shelf 6) on one side is configured to be a ratio of 1:2.

Furthermore, the automated warehouse 1 of the present embodiment is designed so as to assume a case in which the automated warehouse 1 is used to store packages with only one kind of package width (width in the vehicle traveling direction) in the rack 2, and a case in which the automated warehouse 1 is used to store packages with two or more kinds of package widths in the rack 2, according to a usage form of a customer.

Furthermore, the automated warehouse 1 of the present embodiment is designed so as to assume a case in which the width in the depth direction (hereinafter, referred to as a "depth width") of the package is relatively large, and a maximum of two packages can be stored in the depth direction of each rack 2, and a case in which the depth width of the package is relatively small, and a maximum of three packages can be stored in the depth direction of each rack 2.

Hereinafter, a package in the former case will be referred to as a "large package", and a package in the latter case will be referred to as a "small package". In the present embodiment, a ratio of a width of such a large package and a width of a small package is a ratio of 3:2.

In the present embodiment, a ratio of the width in the front-rear direction of the vehicle 4, the width in the depth direction of the rack 2 (shelf 6), the width in the depth direction of the large package, and the width in the depth direction of the small package is a ratio of 3:6:3:2.

Note that in the automated warehouse 1 of the present embodiment, large packages with the depth widths in a range of numeric values that exceed 400 mm and are 600 mm or less are applied, and small packages with the depth widths in a range of numeric values that are 200 mm or more and 400 mm or less are applied. The aforementioned ratio "3:6:3:2" is in the case in which the width in the depth direction of a large package is 600 mm and the width in the depth direction of a small package is 400 mm.

Here, when storing packages in various shapes such as cardboard boxes, for example, these numeric value ranges are used to distinguish the respective packages in various shapes into the "large package" and the "small package", and then the packages are transferred to the rack 2 as described below.

Though not illustrated below, it is also possible to store one extra-large package, which is larger than the aforementioned large package, in the rack 2.

Here, in the present embodiment, the aforementioned "depth width corresponding to one small package" means a maximum of 400 mm of the range of the depth width of the small package described above, and the aforementioned "depth width corresponding to one large package" means a maximum of 600 mm of the range of the depth width of the large package described above. In the present embodiment, the predetermined spaces Sa and Sb are set so that a clearance of +20 mm can be obtained between the respective hooks 46 and 48, and the small package or the large package. Note that the clearance amount like this is properly set according to the specifications of the automated warehouse 1.

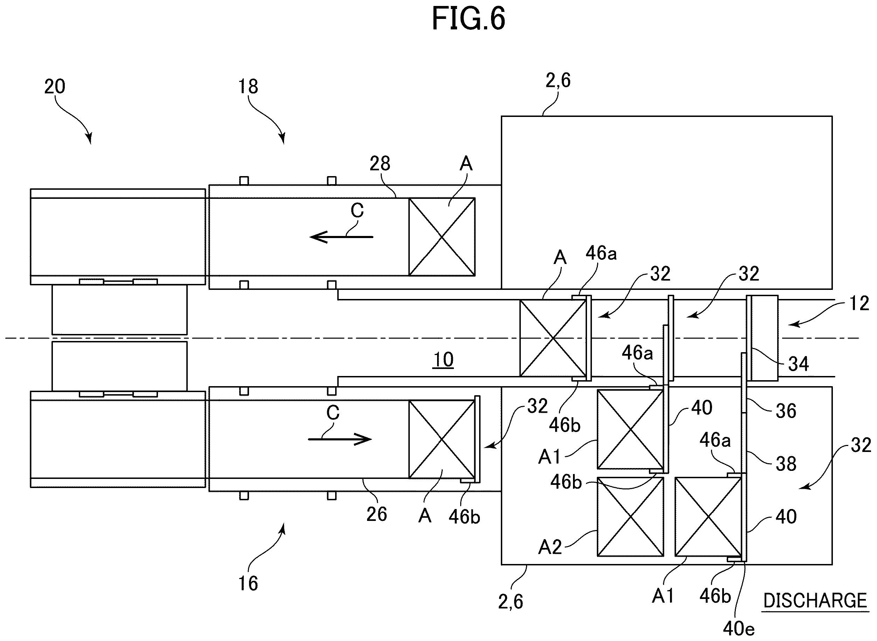

Next, based on Figure 6, a main transfer pattern of the "large package" to the rack 2 by the transfer device 12 of the present embodiment will be described. Figure 6 is a schematic view showing a transfer pattern by the transfer device of the present embodiment, which is a view showing a rack in which placement positions of two large packages are defined in the depth direction, and a shuttle passage. An operation of the transfer pattern described below is controlled by the above-described controller 50 (see Figure 4). Note that Figure 6 shows only one of the side arms 32 for simplification.

First, as shown in Figure 6, on the buffer conveyor 26 on a loading station 16 side, the large package A to be stored in the rack 2 waits to be loaded onto the vehicle 4. The large package A is transferred by the first raising/lowering device 20, and thereafter is conveyed in a direction of an arrow C by the buffer conveyor 26. From this waiting position, the large package A is loaded on the vehicle 4 by the end hook 46b on the back side that is in the protrusion position.

Next, on the traveling path 10, the large package A that is loaded on the vehicle 4 from this waiting position is shown. In the vehicle 4 on the traveling path 10, the large package A is placed on the vehicle 4 so as to fit between the end hook (first end hook) 46a on the front side that is in the protrusion position, and the end hook (second end hook) 46b on the back side that is in the protrusion position. The intermediate hooks 48a and 48b are in the retraction position so as not to interfere with the large package A (Hereinafter, in Figure 6, illustration of the hooks in the retraction positions like them will be omitted).

Thereafter, as shown in Figure 6, the large package A1 is transferred to a placement position on a front side of the rack 2 (in this example, a large package A2 is already stored on a back side of the rack 2) by only the end hook 46a on the front side. Note that at this time, the end hook 46b on the back side may be in the protrusion position as show in Figure 6.

Alternatively, the large package A1 is transferred to a placement position on the back side of the rack 2 only by the first end hook 46a on the front side as shown in the adjacent shelf 6.

The transfers as above are performed without change of the hook (for example, change of the hook from the end hook 46a to the other hook) and without stopping extension/contraction of the side arms 32.

Here, as described above, in the present embodiment, the space Sa between the respective end hooks 46a and 46b is set to the space having at least the space corresponding to the maximum depth width of the "large package". In the present embodiment, it is possible to perform the transfer operation of the "large package" like this by the setting like this.

Note that as shown in Figure 6, the large package A that is loaded on the vehicle 4 from the shelf 6 of the rack 2 is discharged to the buffer conveyor 28 on the unloading station 18 side, is transferred in the direction shown by the arrow C and is unloaded.

Next, based on Figure 7, a main transfer pattern of the "small package" to the rack 2 by the transfer device 12 of the present embodiment will be described. Figure 7 is a schematic view showing the transfer pattern by the transfer device of the present embodiment, which is a view showing a rack in which placement positions of three small packages are defined in the depth direction and a shuttle passage. The operation of the transfer pattern described hereinafter is controlled by the above-described controller 50 (see Figure 4). Note that Figure 7 shows only one of the side arms 32 for simplification.

First, as shown in Figure 7, on the buffer conveyor 26 on the loading station 16 side, a small package B to be stored in the rack 2 waits to be loaded onto the vehicle 4. The small package B is transferred by the first raising/lowering device 20, and thereafter is transferred in the direction of the arrow C by the buffer conveyor 26. From this waiting position, the small package B is loaded on the vehicle 4 by the end hook 46b on the back side that is in the protrusion position.

Next, on the traveling path 10, the small package B that has been loaded from this waiting position on the vehicle 4 from the waiting position, is shown. In this state, the small package B is placed on the vehicle 4 so as to fit between the intermediate hook 48a on the front side that is in the protrusion position, and the end hook 46b on the back side that is in the protrusion position. The other hooks 46a and 48b are in the retraction positions (Hereinafter, in Figure 7, illustration of the hooks in the retraction positions like them will be omitted.).

Thereafter, in the example of Figure 7, this small package B is transferred to the rack 2 shown as a "discharge" side.

That is to say, as shown in Figure 7, a small package B1 is transferred to a placement position on a frontmost side of the rack 2 (in this example, small packages B2 and B3 are already stored on a back side), an intermediate placement position of the rack 2 (in this example, a small package B2 is already stored on the back side), or a placement position on a backmost side of the rack 2, by only the first intermediate hook 48a on the front side.

The transfer as above is performed without change of the hook (for example, without change from the intermediate hook 48a to the other hook), and without stopping extension and contraction of the side arms 32.

Note that when the small package is transferred to the placement position on the front side of the rack 2, and no small package is stored on the back side thereof (intermediate position), or when the package width of the small package on the back side (intermediate position) is equal to or less than the package width of the small package to be transferred, the small package may be transferred by the end hook 46a on the front side without change of the hook.

Furthermore, when a small package is transferred to an intermediate placement position of the rack 2, and no small package is stored on a back side thereof, or when the package width of the small package on the back side is equal to or less than the package width of the small package to be transferred, the small package may be transferred by the end hook 46a on the front side without change of the hook.

Here, as described above, in the present embodiment, the space Sb between the one intermediate hook 48a and the other end hook 46b, and the space Sb between the other intermediate hook 48b and the one end hook 46a are each set to the space having at least the space corresponding to the maximum depth width of the "small package". In the present embodiment, it is possible to perform the transfer operation of the "small package" like this by the setting like this.

Note that when loading the vehicle 4 from the rack 2 shown as the "loading" side in Figure 7, the small packages B1 that are respectively stored in the placement position on the front side of the rack 2, the intermediate placement position, and the placement position on the back side are loaded on the vehicle 4 by the end hook (rear hook) 46a on the back side.

In this way, the small package B that are loaded on the vehicle 4 from the shelf 6 of the rack 2 are discharged onto the buffer conveyor 28 on the unloading station 18 side, are conveyed in the direction shown by the arrow C and are unloaded, as shown in Figure 7.

Next, loading of the small package B onto the vehicle 4 from the buffer conveyor 26 on the loading side will be described in more detail.

First, in the example in Figure 7 described above, the small package B waits at a position closer to the traveling path 10 side on the buffer conveyor 26. Here, in the automated warehouse 1 of the present embodiment, the small package B is brought closer to the one side by disposition of the conveyor, stopper and the like on an upstream side not illustrated, and this enables a waiting position on the buffer conveyor 26 as shown in Figure 7. Furthermore, in order to bring the small package B closer to the one side, a guide plate or the like may be disposed on an upstream side of the buffer conveyor 26.

Furthermore, in the present embodiment, at the time of loading onto the vehicle 4 from the buffer conveyor 26, a placement position of the package on the vehicle 4 is adjusted so as to be able to more rapidly store the package in the rack 2 on which the package is to be stored of the pair of racks 2. Such adjustment is performed by adjusting a stroke of the side arms 32 and properly selecting the hook for loading onto the vehicle 4, at the time of loading onto the vehicle 4.

Here, the shelf 6 of the storage destination of the package to be stored is set in the controllers 22 and 50 in advance. Based on such information of the storage destination, the controllers 22 and 50 determine whether the storage position (shelf 6 to store) of the rack 2 of the small package is on a same side as or on an opposite side to the buffer conveyor 26 on the loading side. Based on this determination, the controllers 22 and 50 determine the stroke of the side arms 32 in the buffer conveyor 26 at the time of loading.

For example, when the small package B is to be stored on the rack 2 (rack 2 shown as the "discharge" side in Figure 7) on the same side as the buffer conveyor 26, the controllers 22 and 50 extend the side arm 32 with such a stroke amount that, for example, the end hook 46b on the back side engages with a rear end edge of the small package B, and thereafter, brings the end hook 46b into the protrusion position to engage the end hook 46b with the rear end edge of the small package B. Thereafter, the side arms 32 are returned onto the vehicle 4 to load the small package on the vehicle 4 from the buffer conveyor 26.

On the other hand, when the small package B is to be stored on the rack 2 (rack 2 shown as the "loading" side in Figure 7) on the opposite side of the buffer conveyor 26, the controllers 22 and 50 extend the side arms 32 with such a stroke amount that, for example, the intermediate hook 48b on the back side engages with the rear end edge of the small package B, and thereafter, brings the intermediate hook 48b into the protrusion position to engage the intermediate hook 48b with the rear end edge of the small package B. Thereafter, the side arms 32 are returned onto the vehicle 4, and the small package is loaded onto the vehicle 4 from the buffer conveyor 26.

By change of the stroke of the side arms 32 and selection of the hook as above, it is possible to transfer the small package B to either side of the pair of racks 2 without change of the hook.

Selection of the stroke amount of the side arms 32 as described above, and the hook to be brought into the protrusion position is performed by the controller 22 (see Figure 1) and/or the controller 50 (see Figure 4).

Note that it is also possible to perform loading by adjusting timing at which the hook to be engaged with the package is brought into the protrusion position while making the stroke amount of the side arm 32 constant when the package is loaded on the vehicle 4 from the buffer conveyor 26. For example, after the side arm 32 has performed the stroke (constant stroke amount) by an amount corresponding to the depth of the buffer conveyor 26, the side arms 32 are returned to the vehicle 4, and thereafter, the intermediate hook 48a is brought into the protrusion position.

Note that it is also conceivable that the waiting position of the package B on the buffer conveyor 26 may be changed according to the configuration of the automated warehouse 1. In order to avoid this, a sorting plate that rectifies and defines the position of the moving package may be disposed on an upstream side of the buffer conveyor 26. By using a sorting plate like this, the small packages B on the buffer conveyor 26 may be properly sorted to the front side (traveling path 10 side) or the back side (back side with respect to the traveling path 10) and may be brought into the waiting positions respectively, according to the side (either side of the pair or racks 2) of the rack 2 where the small package B is to be stored, as described above. The sorting place like this is provided at the loading conveyor 24, for example, but may be provided at the buffer conveyor 26 on each of the stages 8.

Furthermore, depending on the configuration of the conveyor and the like on the upstream side, another position (position away from the traveling path 10, for example) may be a waiting position. In such a case, the transfer device 12 may properly adjust the stroke (extension amount) of the side arms 32 and properly select the hook for loading on the vehicle 4, according to such a waiting position. The stroke amount of the side arms 32 like this, and selection of the hook to be in the protrusion position are performed by the controller 22 (see Figure 1) and/or the controller 50 (see Figure 4).

Next, an aspect of switching the "small package" between the shelves 6 will be described.

In the present embodiment, the controllers 22 and 50 may cause the package to be switched between the shelves 6 in the rack 2 in a same row. Here, the rack 2 in the same row means the one rack 2 of the pair of racks 2 facing each other across the traveling path 10 therebetween, and switching of the package is performed between the plurality of selves 6 in the one rack 2.

That is to say, describing by using Figure 7, for example, in the rack 2 shown as the "loading" side, when the small package B2 that is stored on the back side is desired to be unloaded first, the controllers 22 and 50 firstly load the small package B1 stored on the front side onto the vehicle 4 by the end hook 46a on the back side. Thereafter, the vehicle 4 is moved to a position of a shelf 6 of the switching destination in the rack 2 shown as the same "loading" side, and at this position, the package is transferred by the intermediate hook (second intermediate hook) 48b on the front side. According to switching like this, it is possible to switch the package without changing the hook.

Next, an aspect of switching the "large package" between the shelves 6 will be described.

For example, when a package on the back side is desired to be unloaded first, it is necessary to switch a package on the front side to the other shelf 6. In the case of the "large package", unlike the case of the small package described above, the package on the front side may be switched to the shelf 6 of the rack 2 on the same row, or may be switched to the shelf 6 of the rack 2 on the opposite row.

In the present embodiment, when switching the large package A that is already stored on the shelf 6 to the other shelf 6 like this, the controller 22 (see Figure 1) and/or the controller 50 (see Figure 4) issue an instruction to the vehicle 4 and the transfer device 12 to perform switching between the shelves 6 of the rack 2 on the same row or the opposite row, according to a vacant situation of the shelves 6.

That is to say, describing by using Figure 6, for example, when the package A2 that is stored on the back side is desired to be unloaded first in the rack 2 shown as the "discharge" side, the controllers 22, and 50 first load the large package A1 stored on the front side onto the vehicle 4 by the end hook 46b on the back side. Thereafter, the vehicle 4 is moved to the position of the shelf 6 of the switching destination in the rack 2 shown as the "loading" side, or the rack 2 on the opposite side thereof, and at this position, the large package A1 is transferred by the end hook 46a on the front side. According to switching like this, it is possible to switch the package without changing the hook.

Next, an operation of the side arm 32 during unloading will be described.

For example, when unloading from the rack 2 shown as the "discharge" side in Figure 7, which is on an opposite side of the buffer conveyor 28 on the unloading side, loading is performed onto the vehicle 4 by the end hook (second end hook) 46b on the back side, and the small package B is in the placement position that fits between the end hook 46b on the back side and the intermediate hook 48a on the front side (see the vehicle 4 on the traveling path 10 in Figure 7).

In the position of the package like this, when the package is discharged to the buffer conveyor 28 on the unloading station 18 side, it is possible to discharge the package B to the position on the buffer conveyor 28 shown in Figure 7 by perform strokes of the side arms 32 by the amount corresponding to the depth of the buffer conveyor 28.

On the other hand, when unloading from the rack 2 shown as the "loading" side in Figure 7, which is the same side as the buffer conveyor 28 on the unloading side, loading onto the vehicle 4 is performed by the end hook (first end hook) 46a on the back side, and the small package B is in the placement position (not illustrated) that fits between the end hook 46a on the back side and the intermediate hook 48b on the front side.

When discharging the package to the buffer conveyor 28 on the unloading station 18 side, in the position of the package like this, it is possible to discharge the package B on the same position on the buffer conveyor 28 shown in Figure 7 by changing the stroke amount of the side arms 32 to small (with respect to the case of unloading from the rack 2 on the opposite side of the buffer conveyor 28 on the unloading side). The stroke amount in this case is an amount corresponding to the distance Sb (see Figure 5) between the end hook 46b and the intermediate hook 48a, and thereby it is possible to minimize the stroke amount of the side arms 32 and shorten the transfer time.

As above, in the present embodiment, when discharging the package onto the buffer conveyor 28 during unloading, the stroke amount of the side arms 32 is changed according to the side of the rack 2 where the package B is stored, and the package B is discharged at the same position on the buffer conveyor 28.

On the other hand, as a modification example, the stroke amount of the side arms 32 may be the same regardless of from which of the pair of racks 2, unloading is performed. That is to say, the stroke amount of the side arms 32 may be standardized to be equivalent to the depth of the buffer conveyor 28 during discharge of the package to the buffer conveyor 28.

When set in this way, for example, when the package B is unloaded from the rack 2 on the opposite side ("discharge" side in Figure 7) to the buffer conveyor 28 on the unloading side, the package B is discharged to the position shown in Figure 7, whereas when the package B is unloaded from the rack 2 on the same side ("loading" side in Figure 7) as the buffer conveyor 28 on the unloading side, the position of discharging the package B onto the buffer conveyor 28 is a more back side than the position shown in Figure 7.

When the position of the package B on the buffer conveyor 28 is different in this way, for example, a guide member that rectifies and aligns the moving package B may be provided on a downstream side thereof.

Note that the matters described based on Figure 6 and Figure 7 similarly apply to the rack 2 on each of the stages 8.

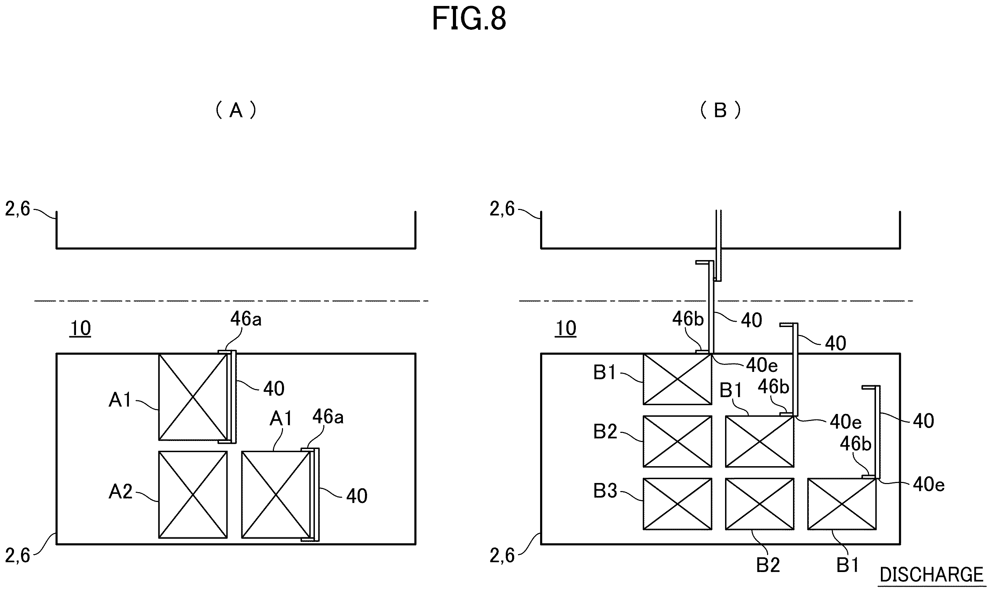

Next, based on Figure 8, reference examples of the transfer operations different from the present embodiment will be described. Figure 8 is a schematic view showing operation patterns of a transfer device according to the reference examples.

First, in a reference example of the case of the large package A show in Figure 8(A), a large package A1 is transferred by an end hook 46a on the front side similarly to the present embodiment described by using Figure 6.

On the other hand, in a reference example of the case of a small package B shown in Figure 8(B), as shown in a rack 2 on a "discharge" side, the small package B1 is transferred with a tip portion 40e of a top arm 40, or an end hook 46b on a back side that is in a protrusion position.

In the example shown in Figure 8(B), after the package B1 is pushed in by a predetermined amount by the end hook 46a on the front side, the arm is returned, and thereafter, the package B1 is pushed in by the tip portion 40e (or an end hook 46b in the protrusion position) of the top arm 40. The predetermined amount is such a pushing amount that the arm does not interfere with a package stored in the rack 2 on the opposite side when the arm is returned. Note that if the package is not stored in the rack 2 on the opposite side, the arm may be once returned into the rack 2 on the opposite side and then push in the package B1 with the tip portion 40e or the like of the top arm 40 without change of hold.

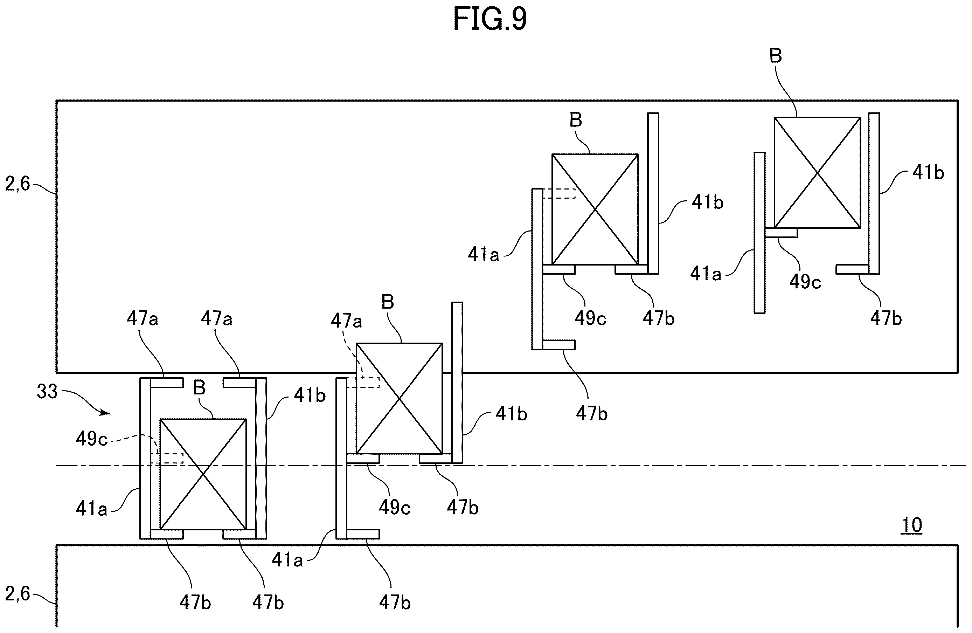

Next, based on Figure 9, another reference example of the transfer operation different from the present embodiment will be described. Figure 9 is a schematic view of a configuration of a side arm of a transfer device and an operation pattern thereof according to the reference example.

In the reference example shown in Figure 9, a top arm 41a of one of a pair of side arms 33 of the transfer device includes two end hooks 47a and 47b, and a central hook 49c provided at an intermediate position between them, and the other top arm 41b includes two end hooks 47a and 47b. The central hook 49c of the one arm 41a is provided at a position equidistant from the respective end hooks 47a and 47b, and an intermediate hook/central hook is not provided at the other arm 41b.

Furthermore, the transfer device 12 is provided with a mechanism that individually performs strokes of the respective side arms 33. Furthermore, opening and closing of the respective end hooks 47a, 47b, and 49c can be individually controlled for each of the arms 41a and 41b.

Figure 9 illustrates aspects in which transfer is progressed in four steps from a left side to a right side thereof.

First, a package B is engaged with the end hook 47b in the protrusion position, of the one arm 41a, and the end hook 47b in the protrusion position, of the other arm 41b. Note that the central hook 49c is retracted so as not to interfere with the package B (for reference, the central hook 49c is shown by a broken line).

Second, from that state, only the other arm 41b performs a stroke to push the package B to the back side. The stroke amount is a stroke amount such that a rear end edge of the package B is in a position where it is engageable with the central hook 49c of the one arm 41a. After such a stroke is completed, the central hook 49c of the one arm 41a is brought into the protrusion position.

Note that during such a stroke, the end hook 47b (shown by a broken line) of the one arm 41a is brought into the retraction position, and the arm 41a itself guides movement of the package.

Third, both the arms 41a and 41b perform strokes to push out the package B. A stroke amount thereof is an amount such that the tip portion of the arm 41b protruded to the back side does not reach a backmost end edge of a shelf 6, thereby making sure that the arm 41b does not hit a back wall surface of the shelf 6.

Fourth, while the other arm 41b is stopped at the third position described above, the package B is pushed out to the placement position at the back side by only the arm 41a.

According to the reference example shown in Figure 9, it is possible to discharge the package B stably in such a manner as to surround the package B by both the arms 41a and 41b as much as possible. Furthermore, it is possible to decrease the total number of hooks and to avoid changing the hooks. Furthermore, since there is no return operation of the arms 41a and 41b due to change of the hooks, the transfer time can be shortened.

Next, an operation effect of the automated warehouse according to the embodiment of the present invention will be described.

First, the shuttle type automated warehouse 1 according to the present invention includes the loading/unloading vehicle 4 including the transfer device 12 that transfers a package, and the racks 2 disposed on both sides of the traveling path 10 for the loading/unloading vehicle 4, the racks 2 are each capable of storing two large packagees A1 having the predetermined depth width in the depth direction or three small packages B1 having the predetermined depth width in the depth direction, the transfer device 12 includes the side arm 32 that has at least the base arm 34, the middle arms 36 and 38, and the top arm 40, and is capable of advancing to the racks 2 on both the sides, a tip of the top arm 40 advancing to a rear end position of a package that is transferred to a backmost side in the depth direction of the rack 2, the end hooks 46a and 46b that are respectively disposed at front and rear ends of the top arm 40, and the two intermediate hooks 48a and 48b that are disposed in the intermediate positions between the respective end hooks 46 in the top arm 40, and the end hooks 46a and 46b are formed in the positions and width that allow the two large packages A to be transferred from the front to the back of the rack 2 by only the end hooks 46a and 46b, with respect to the racks 2 on both the sides of the traveling path 10, and the intermediate hooks 48a and 48b are formed in the positions and width that allows the three small packages B to be transferred from the front to the back of the rack 2 by only the intermediate hooks 48a and 48b, with respect to the racks 2 on both the sides of the traveling path 10.

According to the present embodiment configured as above, since the end hooks 46a and 46b are formed in the positions and width that allow the two large packages A to be transferred from the front to the back of the rack 2, by only the end hooks 46a and 46b with respect to the racks 2 on both the sides of the traveling path 10, and the intermediate hooks 48a and 48b are formed in the positions and width that allow the three small packages B to be transferred from the front to the back of the rack 2 by only the intermediate hooks 48a and 48b with respect to the racks 2 on both the sides of the traveling path 10, it is possible to transfer the small package B to the placement position on the backmost side of the rack 2 by only the intermediate hooks 48a and 48b without change of the hook, and thereby it is possible to transfer the small package B to the placement position on the backmost side of the rack 2 with a minimum stroke amount of the side arm 32. Accordingly, it is possible to efficiently store a plurality of types of packages having the different depth widths in the depth direction of the rack 2.

Furthermore, in the present embodiment, the end hooks 46a and 46b are hooks that are formed to have the space Sa corresponding to at least the maximum depth width of the large package A between the respective end hooks 46a and 46b, and the intermediate hooks 48a and 48b are hooks that are formed to have the space Sb corresponding to at least the maximum depth width of the small package B from the end hooks 46a and 46b that are on the far side of the respective end hooks 46a and 46b.

According to the present embodiment configured as above, since the end hooks 46a and 46b are the hooks that are formed to have the space Sa corresponding to at least the maximum depth width of the large package A between the respective end hooks 46a and 46b, and the intermediate hooks 48a and 48b are the hooks that are formed to have the space Sb corresponding to at least the maximum depth width of the small package B from the end hooks 46a and 46b on the far side of the respective end hooks 46a and 46b, it is possible to transfer the small package B to the placement position on the backmost side of the rack 2 without change of the hook by only the intermediate hooks 48a and 48b, and thereby it is possible to transfer the small package B to the placement position on the backmost side of the rack 2 with the minimum stroke amount of the side arm 32. Accordingly, it is possible to efficiently store a plurality of types of packages having different depth widths in the depth direction of the rack 2.

Furthermore, the present embodiment includes the controllers 22 and 50 that control the buffer conveyor 26 on the loading side which is provided on the one side of the traveling path 10 for the vehicle 4 and on which the packages A and B to be loaded on the vehicle 4 are placed, the storage positions of the packages A and B to the rack 2, and the side arms 32, and the controllers 22 and 50 are configured to determine the stroke of the side arms 32 at the time of loading in the buffer conveyor 26 on the loading side, based on whether the storage position of the rack 2 is on the same side as or on the opposite side to the buffer conveyor 26 on the loading side, when storing three small packages B in the depth direction of the rack 2.

According to the present embodiment as configured as above, since the stroke of the side arms 32 is changed according to whether the storage position of the rack 2 is on the same side as or on the opposite side to the buffer conveyor 26 on the loading side, change of the hook is unnecessary.

Furthermore, in the present embodiment, the controllers 22 and 50 are configured to determine the shelf of the switching destination from the racks 2 on the same side when switching the packages A and B to the shelf 6 from the shelf 6 of the rack 2, transfer of the packages A and B between the shelves 6 is performed in the racks 2 on the same side, and thereby change of the hook is unnecessary.

### Reference Signs List

A, A1, A2 large package
B, B1, B2, B3 small package
Sa space (distance) between end hooks
Sb space (distance) between first intermediate hook and second end hook
Sb space (distance) between second intermediate hook and first end hook
1 shuttle type automated warehouse
2 rack
4 loading/unloading vehicle
6 shelf
8 shelf stage
10 traveling path
12 transfer device
14, 15 loading station
18, 19 unloading station
20, 21 raising/lowering device
22 controller
24 loading conveyor
26, 27 buffer station on loading side
28, 29 buffer station on unloading side
30 unloading conveyor
32 side arm
34 base arm
36 middle arm (first middle arm)
38 middle arm (second middle arm)
40 top arm
46a end hook (first end hook)
46b end hook (second end hook)
48a intermediate hook (first intermediate hook)
48b intermediate hook (second intermediate hook)
50 controller

## Claims

1. A shuttle type automated warehouse comprising a loading/unloading vehicle including a transfer device that transfers a package, and racks disposed at both sides of a traveling path for the loading/unloading vehicle, wherein
the racks are each capable of storing two large packages having a predetermined depth width, in a depth direction, or three small packages having a predetermined depth width, in the depth direction,
the transfer device comprises
a side arm that is a side arm having at least a base arm, a middle arm, and a top arm, and capable of advancing to the racks on both the sides, in which a tip of the top arm advances to a rear end position of a package that is transferred to a backmost side in the depth direction of each of the racks,
end hooks respectively disposed at front and rear ends of the top arm, and
two intermediate hooks disposed between the respective end hooks in the top arm,
the end hooks are formed in positions and a width that allow the two large packages to be transferred from front to back of each of the racks by only the end hooks, with respect to the racks on both the sides of the traveling path, and
the intermediate hooks are formed in positions and a width that allow the three small packages to be transferred from the front to the back of each of the racks by only the intermediate hooks, with respect to the racks on both the sides of the traveling path.

2. A shuttle type automated warehouse comprising a loading/unloading vehicle including a transfer device that transfers a package, and racks disposed on both sides of a traveling path for the loading/unloading vehicle, wherein
the racks are each capable of storing two large packages having a predetermined depth width, in a depth direction, or three small packages having a predetermined depth width, in the depth direction,
the transfer device comprises
a side arm that is a side arm having at least a base arm, a middle arm, and a top arm, and is capable of advancing to the racks on both the sides, in which a tip of the top arm advances to a rear end position of a package that is transferred to a backmost side in the depth direction of each of the racks,
end hooks respectively disposed at front and rear ends of the top arm, and
two intermediate hooks disposed between the respective end hooks in the top arm,
the end hooks are hooks that are formed to have a space corresponding to at least a maximum depth width of each of the large packages between the respective end hooks, and
the intermediate hooks are hooks that are formed to have a space corresponding to at least a maximum depth width of each of the small packages from the end hooks on a far side of the respective end hooks.

3. The shuttle type automated warehouse according to claim 1 or claim 2, further comprising:
a controller that controls a predetermined conveyor on a loading side which is provided on one side of the traveling path for the loading/unloading vehicle and on which a package to be loaded onto the vehicle is placed, and a storage position of a package to each of the racks and the side arm of the transfer device, wherein
the controller is configured to determine a stroke of the side arm at a time of loading in the predetermined conveyor based on whether the storage position of each of the racks is on a same side as or an opposite side to the predetermined conveyor, when storing the three small packages in the depth direction of each of the racks.

4. The shuttle type automated warehouse according to claim 1 or claim 2, further comprising
a controller that controls a storage position of a package to each of the racks, and the side arm of the transfer device, wherein
the controller is configured to determine a shelf of a switching destination from shelves of a rack on a same side when switching a package to the shelf from a shelf of the racks.
